## Europäisches Patentamt

## European Patent Office

## Office européen des brevets

(19)

(11) Veröffentlichungsnummer: **0 210 344 B1**

(12) **EUROPÄISCHE PATENTSCHRIFT**

(45) Veröffentlichungstag der Patentschrift:
04.10.89

(51) Int. Cl.⁴: **B29C 49/46**, B29C 49/80

(21) Anmeldenummer: **86105448.4**

(22) Anmeldetag: **19.04.86**

(54) Verfahren zum Aufblasen und Fluorieren von Kunststofftanks.

(30) Priorität: **28.06.85 DE 3523137**

(43) Veröffentlichungstag der Anmeldung:
**04.02.87 Patentblatt 87/6**

(45) Bekanntmachung des Hinweises auf die Patenterteilung:
**04.10.89 Patentblatt 89/40**

(84) Benannte Vertragsstaaten:
**FR GB IT**

(56) Entgegenhaltungen:
**EP-A- 0 039 929**
**EP-A- 0 176 044**
**EP-A- 0 212 554**
**DE-A- 1 905 094**
**DE-A- 2 924 797**
**US-A- 2 811 468**
**US-A- 3 862 284**
**US-A- 3 998 180**
**US-A- 4 396 567**

**PATENT ABSTRACTS OF JAPAN, Band 6,**
**Nr. 224 (M-170)[1102], 9. November 1982; &**
**JP-A-57 128 518 (SUMITOMO JUKIKAI KOGYO**
**K.K.) 10-08-1982**

(73) Patentinhaber: **AUDI AG,**
**Auto-Union-Strasse 1 Postfach 220,**
**D-8070 Ingolstadt(DE)**

(72) Erfinder: **Ufer, Peter, Peisserstrasse 42,**
**D-8070 Ingolstadt(DE)**
Erfinder: **Schäper, Siegfried, Dr., Am Fort 5,**
**D-8071 Wettstetten(DE)**
Erfinder: **Haldenwanger, Hans-Günther,**
**Behaimstrasse 16 a, D-8070 Ingolstadt(DE)**
Erfinder: **Paulus, Ingrid, Am Pfahl 5,**
**D-8072 Manching(DE)**

(74) Vertreter: **Le Vrang, Klaus, AUDI AG**
**Postfach 220 Patentabteilung I/EQP,**
**D-8070 Ingolstadt(DE)**

**Beschreibung**

Die vorliegende Erfindung betrifft ein Verfahren zum Aufblasen und Fluorisieren von Kunststofftanks nach dem Oberbegriff des Anspruchs 1.

Ein derartiges Verfahren ist aus der DE-PS 24 01 948 bekanntgeworden. Die dortige Lehre geht davon aus, daß das eingesetzte Blasgas neben dem Inertgas 0,1 - 10 Vol% Fluor enthält. Zwar wird hierdurch sichergestellt, daß der Vorformling zur Anlage an die Innenkontur aufgeweitetwird und daß gleichzeitig eine impermeable Innenschicht entsteht. Nachteilig hat sich jedoch bemerkbar gemacht, daß diese Lehre in keinerlei Weise die Toxizität und die korrosionsfördernden Eigenschaften von Fluor berücksichtigt. Gerade beim Einsatz der bekannten hydraulischen Vorrichtungen zum Öffnen und Schließen der Blasformen ist das Risiko besonders hoch, daß schädliche Fluormengen unbeabsichtigt die Blasform verlassen, wenn beispielsweise der Kunststofftank undicht ist oder die hydraulische Verriegelung versagt.

Auch der weitere Stand der Technik, gemäß US-PS 2 811 468, DE-PS 19 05 094, DE-PS 24 01 948, DE-AS 26 44 508, DE-PS 29 24 797, der sich mit ähnlichen Verfahren beschäftigt, läßt beim Arbeiten mit Fluor Sicherheitsvorkehrungen vermissen.

Der vorliegenden Erfindung liegt deshalb die Aufgabe zugrunde, das eingangs genannte Verfahren derart zu verbessern, daß es Fluor-Schäden für Personal und Maschinen mit Sicherheit vermeidet.

Diese Aufgabe wird durch das im Anspruch 1 gekennzeichnete Verfahren gelöst.

Erfindungsgemäß wird also zunächst einmal statt bzw. in Ergänzung einer hydraulischen Zuhaltung eine mechanische Verriegelung zur Formsicherung vorgesehen. Es versteht sich, daß diese derart gestaltet ist, daß sie den herrschenden Belastungen standhält. Gleichzeitig wird jedoch das Blasverfahren in drei Stufen unterteilt, nämlich in eine erste Stufe des Aufblasens, die nur mit Inertgas durchgeführt wird, das keinerlei Fluoranteil besitzt. Diese Stufe wird bis zu einem Druck zwischen 2 und 4 bar, insbesondere 3 bar durchgeführt, woran sich Sicherheitskontrollen als zweite Stufe anschließen, die einerseits die mechanische Verriegelung und andererseits die Druckkonstanz überprüfen. Sollte zu diesem Zeitpunkt festgestellt werden, daß Druckverluste auftreten, kann das Verfahren noch abgebrochen werden, ohne daß schädliches Fluor die Form verläßt. Erst im Anschluß an diese Sicherheitskontrollen wird dann in einer dritten Stufe das Fluor-Inertgas-Gemisch in die Blasform eingeleitet, wodurch dann die impermeable Innenschicht erzeugt wird. Die erfindungsgemäße Dreistufigkeit führt also zuverlässig zur gewünschten Betriebssicherheit.

Weitere Ausgestaltungen der Erfindung gehen aus den vorstehenden Unteransprüchen hervor.

Im folgenden wird ein bevorzugtes Ausführungsbeispiel anhand der Figuren näher erläutert.

Es zeigt:

Fig. 1 eine schematische Darstellung der Verfahrensanlage und

Fig. 2 eine Kurvendarstellung des Druckverlaufes beim Aufblasen des Kunststofftanks.

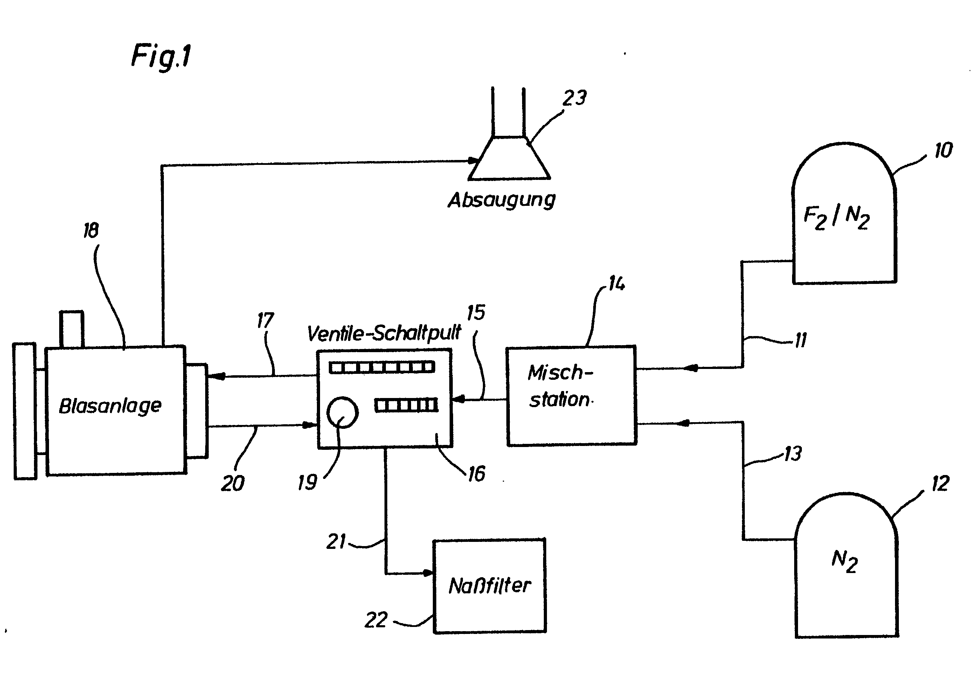

In Fig. 1 sind die beiden Druckbehälter für das $F_2/N_2$- Gemisch und den reinen Stickstoff mit 10 bzw. 12 bezeichnet. Sie sind jeweils über eine eigene Leitung 11 bzw. 13 mit der Mischstation 14 verbunden. Zunächst wird diese Mischstation in der ersten Stufe ausschließlich mit reinem Stickstoff aus dem Druckbehälter 12 über die Leitung 13 beliefert. Das reine $N_2$ gelangt dann über die Leitungen 15 und 17 zur Blas- bzw. Formanlage 18. Das Manometer (nicht gezeigt) in der Blasanlage ist mit seinem Anzeigegerät 19 im Ventile-Schaltpult 16 verbunden, wo der jeweils herrschende Druck abgelesen werden kann. Sobald dieser 3 bar erreicht hat, wird das Ventil (nicht gezeigt), das die Stickstoffzufuhr steuert, geschlossen.

Zu diesem Zeitpunkt wird dann kontrolliert, ob der Druck konstant bleibt und ob die Blasform einwandfrei mechanisch verriegelt ist. Erst wenn dieser Druck konstant bleibt, also der Kunststofftank offensichtlich dicht ist, setzt die zweite Stufe ein, nämlich das Blasen mit dem Fluor-Stickstoffgemisch, wobei der Fluoranteil etwa 1 % beträgt. Es sei jedoch angemerkt, daß das Blasgemisch auch eine andere, dem Stand der Technik bekannte Zusammensetzung umfassen kann. Auch sind die Mengenangaben hinsichtlich Fluor in keiner Weise kritisch, sondern lassen sich im breiten Rahmen variieren. Die Steuerung der zweiten Stufe erfolgt wiederum vom Ventile-Schaltpult 16. In der zweiten Stufe wird der Tank bis ca. 10 bar aufgeblasen, wobei sich dann im Inneren des Tanks eine Schicht aus fluoriertes Polyäthylen ausbildet, die die gewünschte Impermeabilität bezüglich Lösungsmittel und dergl. besitzt. Der Druck von etwa 10 bar wird dann über einen Zeitraum von etwa 30 Sekunden aufrechterhalten. Daran anschließend wird das Gasgemisch aus der Blasform über die Leitungen 20,21 abgesaugt, die zu einem Kalksteinnaßfilter führen, wo die Fluoranteile absorbiert werden.

Die Blasform 18 wird im Anschluß daran mehrfach mit reinem Stickstoff aus dem Druckbehälter 12 kommend oder mit getrockneter Luft gespült. Evtl. noch vorhandene Reste an Fluor, die beim Öffnen der Blasform 18 entweichen könnten, werden über einen Schlauch von einer Absaugung 23 abgesaugt.

Das erfindungsgemäße Verfahren stellt also in jeder Weise sicher, daß Fluor nicht mehr ungehindert und unkontrolliert in die Atmosphäre entweicht.

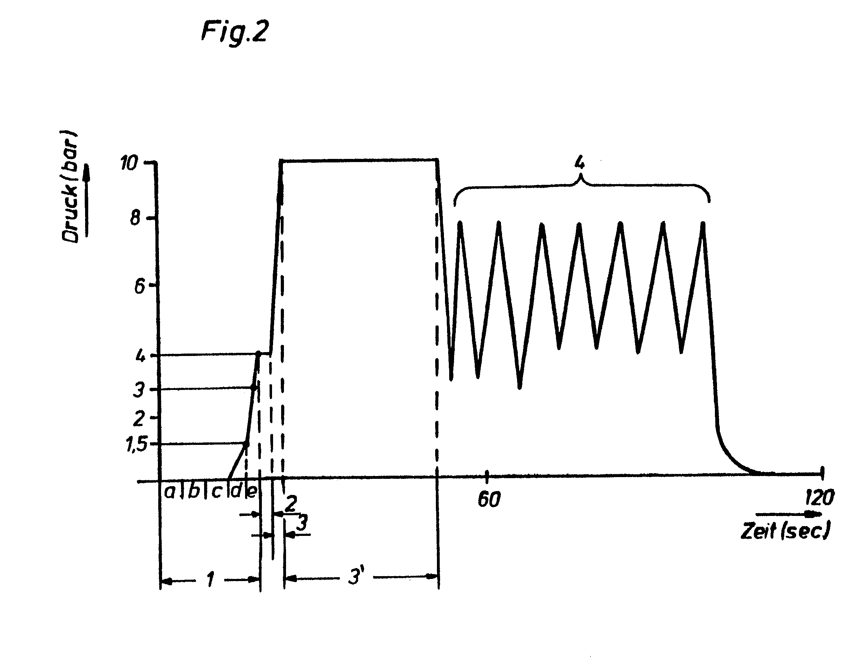

In Fig. 2 ist noch einmal schematisch der Druckverlauf über 120 Sekunden gezeigt, wobei die einzelnen Verfahrensschritte angegeben sind. Erfindungsgemäß werden also die Sicherheitskontrollen danach bei ca. 3 bar durchgeführt. Das Einleiten des Fluor-Stickstoffgemisches erfolgt erst ab 4 bar.

Im einzelnen wird die erste Stufe 1 in folgende Schritte aufgeteilt:

a. Stickstoff-Spülen des Schlauches
b. Stickstoff-Vorblasen des Schlauches

c. Schließen der Form
d. Erstes Vorblasen mit Stickstoff von unten
e. Zweites Vorblasen mit Stickstoff von unten

In der zweiten Stufe 2 erfolgt dann die Sicherheitskontrolle der Dichtigkeit des Systems mittels Überprüfung der Druckkonstanz, sowie die Kontrolle der Werkzeugverriegelung. Schließlich wird in der dritten Stufe 3 der Druck bis auf ca. 10 bar gesteigert, wobei gleichzeitig das Fluor-Inertgasgemisch eingeleitet wird. Die dritte Stufe 3' stellt daran anschließend das Druckhalten bei ca. 10 bar für einen Zeitraum von ca. 30 Sekunden dar. Dann wird zum Abschluß mehrfach mit Stickstoff oder Trockenluft gespült, wie dieses durch den Verlauf 4 der Kurve angedeutet ist.

## Patentansprüche

1. Verfahren zum Aufblasen und Fluorieren von Kunststofftanks, wobei ein Vorformling innerhalb einer geschlossenen Blasform mittels eines Inertgas enthaltenden Blasgases zur Anlage an die Innenkontur der Blasform aufgeweitet und durch Fluor eine möglichst impermeable Innenschicht hergestellt wird, dadurch gekennzeichnet, daß die Blasform vor dem Aufblasen mechanisch verriegelt wird, und daß in einer ersten Stufe das Aufblasen ausschließlich mittels Inertgas durchgeführt wird und daß nach Erreichen eines Druckes zwischen 2 - 4 bar in einer zweiten Stufe eine Sicherheitskontrolle der Dichtigkeit des Systems, insbesondere des Behälters mittels der Überprüfung der Druckkonstanz, sowie eine Sicherheitskontrolle der Werkzeugverriegelung durchgeführt wird, und daß anschließend daran in einer dritten Stufe ein Fluor-Inertgas-Gemisch in die Blasform eingeleitet wird.

2. Verfahren nach Anspruch 1, dadurch gekennzeichnet, daß die Sicherheitskontrollen bei einem Druck von ca. 3 bar durchgeführt werden.

3. Verfahren nach Anspruch 1 und 2, dadurch gekennzeichnet, daß als Inertgas reiner Stickstoff in der ersten Blasstufe eingesetzt wird.

4. Verfahren nach Anspruch 3, dadurch gekennzeichnet, daß das Fluor-Stickstoff-Gemisch der dritten Stufe einen Fluoranteil von weniger als 1,5 % besitzt.

5. Verfahren nach Anspruch 1 bis 4, dadurch gekennzeichnet, daß als Kunststoff Polyäthylen eingesetzt wird und daß die impermeable Innenschicht dementsprechend als fluoriertes Polyäthylen ausgebildet wird.

## Claims

1. Process for inflating and fluorinating plastic tanks, a parison being widened within a closed blow mould by means of a blowing gas containing an inert gas up to contact with the inside contour of the blow mould and an inside layer which is as impermeable as possible being produced by means of fluorine, characterized in that the blow mould is mechanically locked before inflating and that, in a first stage, the inflating is carried out exclusively by means of inert gas and that, after a pressure of between 2 and 4 bar has been reached, a safety check of the leaktightness of the system, in particular the tank, is carried out in a second stage by checking constancy of the pressure, and a safety check of the mould-locking mechanism is carried out, and that subsequently thereto a fluorine/inert gas mixture is introduced into the blow mould in a third stage.

2. Process according to Claim 1, characterized in that the safety checks are carried out at a pressure of about 3 bar.

3. Process according to Claims 1 and 2, characterized in that pure nitrogen is used as the inert gas in the first blowing stage.

4. Process according to Claim 3, characterized in that the fluorine/nitrogen mixture of the third stage has a fluorine content of less than 1.5%.

5. Process according to Claims 1 to 4, characterized in that polyethylene is employed as the plastic and that the impermeable inside layer is accordingly formed as fluorinated polyethylene.

## Revendications

1. Procédé de soufflage et de fluoration de réservoirs en matière plastique, dans lequel une ébauche subit une extension à l'intérieur d'un moule de soufflage fermé, au moyen d'un gaz de soufflage contenant un gaz inerte, de façon à être appliquée sur le contour intérieur du moule de soufflage, et dans lequel il est formé, à partir de fluor, une couche intérieure aussi imperméable que possible, caractérisé en ce que le moule de soufflage est verrouillé mécaniquement avant le soufflage, en ce que, dans une première étape, le soufflage est effectué exclusivement au moyen de gaz inerte, en ce qu'après qu'une pression comprise entre 2 et 4 bars a été atteinte, il est procédé, dans une deuxième étape, à un contrôle de sécurité de l'étanchéité du système, en particulier du réservoir, au moyen de la vérification de la constance de la pression, ainsi qu'à un contrôle de sécurité du verrouillage du moule, et en ce qu'à la suite de cela, dans une troisième étape, un mélange de fluor et de gaz inerte est injecté dans le moule de soufflage.

2. Procédé selon la revendication 1, caractérisé en ce que les contrôles de sécurité sont effectués à une pression d'environ 3 bars.

3. Procédé selon la revendication 1 ou 2, caractérisé en ce que de l'azote pur est injecté, en tant que gaz inerte, dans la première étape de soufflage.

4. Procédé selon la revendication 3, caractérisé en ce que le mélange de fluor et d'azote de la troisième étape a une teneur en fluor de moins de 1,5%.

5. Procédé selon l'une quelconque des revendications 1 à 4, caractérisé en ce que du polyéthylène est utilisé comme matière plastique et en ce qu'en conséquence, la couche intérieure imperméable est faite de polyéthylène fluoré.

Fig.1

Fig.2

EP 0 210 344 B1